# DEMANDE DE BREVET EUROPEEN

(11) **EP 2 044 847 A1**
(43) Date de publication de la demande: **08.04.2009**
(21) Numéro de dépôt: 08101909.3
(22) Date de dépôt: 26.09.2005
(51) Int. Cl.: A23L 1/0522, A23L 1/09, A23G 3/00

(54) **Confiserie gélifieé à base à base d'amidon et procédé de préparation d'une telle confiserie**

(30) Priorité: 05.10.2004 FR 0410488
(62) Demande divisionnaire de: 05291991.7
(71) Demandeur: ROQUETTE FRERES, 62136 Lestrem (FR)
(72) Inventeur: Boursier, Bernard, 62138, VIOLAINES (FR); Quettier, Claude, 59130, LAMBERSART (FR); Lesage, Daniel, 59670, SAINTE MARIE CAPPEL (FR)
(74) Mandataire: Cabinet Plasseraud

(57) **Abrégé**

La présente invention a pour objet une confiserie gélifiée à base d'amidon caractérisée en ce qu'elle comprend un amidon de légumineuse fluidifié et stabilisé présentant une teneur en amylose comprise entre 25 et 40%, de préférence comprise entre 30 et 40%, ainsi que son procédé de préparation sans étape d'étuvage.

## Description

L'invention a pour objet une nouvelle confiserie gélifiée à base d'amidon. Plus précisément, l'invention concerne une nouvelle confiserie gélifiée comprenant un amidon particulier. On entend par confiserie gélifiée au sens de la présente invention les gommes et les gelées, qui font partie des articles tendres par rapport aux sucres cuits. Ces confiseries sont notamment constituées d'agents édulcorants, d'arômes, de colorants, et d'un ou plusieurs agents épaississants et/ou gélifiants tels que la gomme arabique, la gélatine, la pectine, les carraghénanes et l'amidon.

Il n'existe pas de définitions précises de ces différentes confiseries gélifiées, que l'on peut classer arbitrairement en gommes dures et gommes tendres.

Les gommes dures (« fruit gums », « liquorice gums », « pastilles ») sont par exemple les gommes aux fruits, à la menthe, à la réglisse. Ces gommes sont traditionnellement réalisées à base de gomme arabique utilisée comme agent épaississant. Elles sont transparentes, dures, peu collantes et se solubilisent lentement en bouche.

Les gommes tendres regroupent les gelées et les gommes (« jelly beans », « wine gums »), traditionnellement préparées à base de gélatine employée comme agent gélifiant et apportant l'élasticité requise pour ces articles tendres, de texture élastique à plastique. Les gommes tendres comprennent traditionnellement également les gelées à base de pectine et à base de carraghénanes ou d'agar-agar.

Les confiseries gélifiées, dures ou tendres, sont généralement fabriquées par cuisson d'un mélange comprenant en général un mélange de sucre et de sirop de glucose ou de maltitol, auquel on ajoute après cuisson un agent épaississant ou gélifiant, des arômes, acides, colorants et édulcorants intenses. Le mélange cuit et aromatisé est ensuite généralement coulé dans des moules ou dans de l'amidon de coffrage, puis étuvé de manière à obtenir un séchage et une prise du gel avant récupération de l'article final.

Dans ces deux types de confiseries, on cherche depuis de nombreuses années à remplacer tout ou partie de la gélatine ou la gomme arabique, soit en raison de leur prix élevé, soit en raison de leur origine animale à risque, par de l'amidon, des fécules, des dextrines ou leurs mélanges, en tant qu'agent épaississant ou gélifiant. Toutefois, l'homme du métier s'est trouvé confronté à de nombreux inconvénients .
- l'amidon confère une perte de clarté du gel et un intense collant en bouche,
- l'amidon impose des températures de cuisson très élevées et développe des viscosités à la coulée souvent fortes.

Concernant plus particulièrement les gommes dures, de nombreuses tentatives ont été décrites dans l'art antérieur pour formuler des gommes et en particulier des « wine-gums » à l'amidon.

En fonction de son origine, l'amidon présente des variations de composition, en particulier en ce qui concerne les pourcentages d'amylose et d'amylopectine. L'amylopectine est la composante ramifiée de l'amidon où les unités d'α-D glucose sont polymérisées par des liaisons αD(1-4) et sont reliées avec des branchements en αD(1-6).

L'amylose est la composante linéaire de l'amidon, qui ne renferme pratiquement que des liaisons αD(1-4).

Certaines variétés d'amidon, dites « waxy » sont constituées essentiellement d'amylopectine. D'autres, dites « riches en amylose » sont constituées de plus de 50% et généralement de 70 à 75% d'amylose.

Le document US 3.218.177 proposait, il y a plus de trente ans, d'utiliser des amidons riches en amylose et en particulier des amidons de mais comme seul et unique agent épaississant. Seules des teneurs en amylose supérieures à 40% permettaient de préparer des confiseries satisfaisantes, mais de tels amidons nécessitaient des températures de cuisson très élevées, supérieures à 150°C (environ 165 à 170°C pour une formule de gomme) et des pressions de vapeur très élevées, donc des appareillages spécifiques dont les confiseurs ne sont généralement pas équipés. De plus, les amidons riches en amylose rétrogradent fortement après cuisson et posent des problèmes de viscosité à la coulée. L'homme du métier sait par ailleurs que seule l'amylose joue le rôle de gélifiant, que l'amylopectine confère l'élasticité aux produits mais gélifie plus lentement et augmente beaucoup plus la viscosité à la coulée que l'amylose, que l'amylose donne des gels opaques alors que l'amylopectine donne des produits transparents.

Il a alors été proposé dans le document US 4.886.678 d'utiliser des amidons de mais modifiés par voie enzymatique de manière à obtenir des amidons débranchés dont la répartition amylose/amylopectine différente permettait une gélification plus importante.

L'on a ensuite tenté de mélanger différents amidons riches en amylose, modifiés ou non, de manière à en conjuguer les propriétés, comme notamment dans les documents EP-B1-0 252 306 et EP-B1-0 360 046.

Il était alors reconnu que seuls des amidons riches en amylose permettaient d'obtenir des confiseries de texture satisfaisante, proche des confiseries à base de gomme arabique, particulièrement lorsqu'elles contenaient un mélange d'amidon riche en amylose et d'amidon fluide à chaud. L'on a alors tenté de préparer des amidons issus de céréales modifiées génétiquement, comme décrit dans le document EP-A-0 462 692 mais il était toujours nécessaire de mélanger ces amidons à des amidons fluides à chaud afin d'obtenir des propriétés satisfaisantes dans les gommes.

Plus récemment, le document EP-B1-0 591 473 a proposé un mélange d'amidons de maïs riches en amylose et riches en amylopectine fluidifiés pour la préparation de gommes.

En ce qui concerne les gommes à la gélatine, c'est l'amidon waxy, en association avec des carraghénanes qui donne les meilleurs résultats, comme décrit dans la demande de brevet EP-A-1.342.417, tout en n'égalant toutefois pas la gélatine.

Toutes les voies proposées pour remplacer la gomme arabique ou la gélatine ne permettent pas soit d'obtenir des textures comparables aux gommes standard, soit d'utiliser un procédé de production simple, rapide et peu coûteux. Un des problèmes majeurs auxquels sont confrontés les confiseurs lors de la fabrication de gommes à l'amidon est l'évaporation de l'eau contenue dans le mélange cuit par étuvage des gommes, qui se révèle bien souvent très longue, du fait que les amidons ne permettent une mise en oeuvre qu'à faible matière sèche. La réduction de ce temps d'étuvage est donc recherchée par les confiseurs.

La stabilité thermique des confiseries obtenues est aussi une des préoccupations majeures surtout lorsque celles-ci sont destinées aux pays chauds. La plus forte résistance à la fonte est alors recherchée pour s'assurer de la stabilité des gommes dans le temps.

Il existait donc un besoin pour un amidon susceptible de remplacer la gomme arabique et/ou la gélatine dans les confiseries gélifiées, et capable de développer une viscosité faible à chaud, permettant ainsi de travailler à haute matière sèche et à une température de cuisson pas trop élevée, apte à former rapidement un gel, permettant un démoulage facile des articles, permettant lorsque qu'elle était nécessaire de supprimer l'étape d'étuvage préalable, et conférant aux confiseries les qualités recherchées qui sont .
- un aspect visuel satisfaisant
- pas de caractère collant ni en bouche ni dans l'emballage final
- une texture en bouche la plus proche possible du témoin sans amidon
- une stabilité satisfaisante vis à vis du durcissement ou de la fonte dans le temps.

Et c'est après de nombreuses recherches que la Demanderesse a trouvé qu'un tel but pouvait être atteint dès lors qu'on utilise un amidon particulier comme agent épaississant ou gélifiant.

La présente invention a donc pour objet une confiserie gélifiée à base d'amidon caractérisée en ce qu'elle comprend un amidon de légumineuse fluidifié et stabilisé présentant une teneur en amylose comprise entre 25 et 40%, de préférence comprise entre 30 et 40%. La teneur en amylose dudit amidon est encore plus préférentiellement comprise entre 35 et 40%, et mieux entre 35 et 38%.

Le terme « confiserie gélifiée » doit être interprété selon la présente invention comme désignant les gommes dures, les gommes tendres, les réglisses, les gelées, les pastilles, les pâtes de fruits, ainsi que les inclusions pour crèmes glacées ou pâtisseries, ou encore les confiseries du même type dites pharmaceutiques.

Par « légumineuse » au sens de la présente invention, on entend toute plante appartenant aux familles des césalpiniacées, des mimosacées ou des papilionacées et notamment toute plante appartenant à la famille des papilionacées comme, par exemple, le pois, le haricot, la fève, la fèverole, la lentille, la luzerne, le trèfle ou le lupin.

Cette définition inclut notamment toutes les plantes décrites dans l'un quelconque des tableaux contenus dans l'article de R. HOOVER et al. intitulé « Composition, structure, functionality and chemical modification of legume starches: a review » (Can. J. Physiol. Pharmacol. 1991,69 pp. 79-92).

De préférence, la légumineuse est choisie dans le groupe comprenant le pois, le haricot, la fève et la fèverole.

Avantageusement, il s'agit de pois, le terme « pois » étant ici considéré dans son acception la plus large et incluant en particulier :
- toutes les variétés sauvages de « pois lisse » (« smooth pea »), et
- toutes les variétés mutantes de « pois lisse » et de « pois ridé » (« wrinkled pea ») et ce, quelles que soient les utilisations auxquelles on destine généralement lesdites variétés (alimentation humaine, nutrition animale et/ou autres utilisations).

Lesdites variétés mutantes sont notamment celles dénommées « mutants r », « mutants rb », « mutants rug 3 », « mutants rug 4 », « mutants rug 5 » et « mutants lam » tels que décrits dans l'article de C-L HEYDLEY et al. intitulé « Developing novel pea starches » Proceedings of the Symposium of the Industrial Biochemistry and Biotechnology Group of the Biochemical Society, 1996, pp. 77-87.

Selon une autre variante avantageuse, la légumineuse est une plante, par exemple une variété de pois ou de féverole, donnant des graines contenant au moins 25 %, de préférence au moins 40 %, en poids d'amidon (sec/sec).

Par « amidon de légumineuse », on entend toute composition extraite et ce, de quelque manière que ce soit, d'une légumineuse et notamment d'une papilionacée, et dont la teneur en amidon est supérieure à 40 %, de préférence supérieure à 50 % et encore plus préférentiellement supérieure à 75 %, ces pourcentages étant exprimés en poids sec par rapport aux poids sec de ladite composition.

Avantageusement, cette teneur en amidon est supérieure à 90 % (sec/sec). Elle peut en particulier être supérieure à 95 %, y compris supérieure à 98 %.

Par « fluidification » de l'amidon, on entend toutes les opérations connues de l'homme du métier visant à diminuer la viscosité de l'amidon à la cuisson. La fluidification est obtenue par hydrolyse de l'amylose et de l'amylopectine contenues dans le granule d'amidon. L'on peut opérer par voie acide en milieu humide ou en voie sèche, par oxydation, par dextrinisation à sec (pulvérisation de l'acide sur l'amidon sec puis grillage à température élevée).

Par « stabilisation » de l'amidon, on entend toutes les opérations connues de l'homme du métier visant à ralentir ou freiner la rétrogradation de l'amidon. La stabilisation est obtenue par substitution des fonctions hydroxyles de l'amidon, par estérification ou éthérification. Elle peut également être obtenue par oxydation. Ces traitements de stabilisation sont notamment l'hydroxypropylation, l'acétylation, la phosphatation, l'oxydation. On préfère selon la présente invention un amidon acétylé ou hydroxypropylé.

La stabilisation et la fluidification peuvent être effectuées dans n'importe quel ordre. Dans le cas d'une stabilisation par acétylation, on préférera toutefois procéder d'abord à la fluidification. Dans le cas d'une stabilisation par hydroxypropylation, la fluidification sera effectuée en second lieu, et en phase sèche de préférence. Fluidification et stabilisation peuvent s'effectuer en phase humide sur un lait d'amidon, ou en phase sèche comme par exemple selon les techniques décrites dans le brevet EP 902.037 B1 dont la Demanderesse est titulaire. Des combinaisons voie sèche/voie humide peuvent également être envisagées.

Il est particulièrement étonnant qu'un tel amidon à teneur en amylose réduite puisse convenir à la fabrication de gommes, ce qui va à l'encontre de tous les préjugés de l'art antérieur, qui préconisaient soit des amidons très riches en amylose, soit des amidons pauvres en amylose (moins de 25%) pour substituer respectivement la gomme arabique et la gélatine.

Les confiseries gélifiées selon la présente invention comprennent de préférence un amidon de pois fluidifié et acétylé ou fluidifié et hydroxypropylé. Les niveaux de fluidification, d'hydroxypropylation et/ou d'acétylation seront ajustés en fonction de la texture, de la transparence et du goût souhaités. A titre indicatif, on utilisera un amidon de fluidité dans l'eau (WF) comprise entre 70 et 90, de préférence comprise entre 80 et 90 et encore plus préférentiellement entre 80 et 85. L'indice d'acétylation pourra être compris entre 0,5 et 2,5, de préférence compris entre 1 et 2,1 et encore plus préférentiellement entre 1,6 et 2,1. Dans le cas de l'hydroxypropylation, on choisira de préférence un degré de substitution moléculaire (DS) compris entre 0,09 et 0,21. Les méthodes de mesure de ces niveaux de transformation sont largement connues de l'homme de l'art et décrites dans l'état de la technique.

Les confiseries gélifiées selon l'invention comprennent une teneur en amidon, exprimée en poids par rapport au poids total de la gomme comprise entre 0,5 et 25%, de préférence entre 1 et 20% et plus préférentiellement entre 5 et 15%.

Elles comprennent également un ou plusieurs agents édulcorants.

On peut utiliser divers édulcorants, tels que sucres ou polyols, sous forme de poudre ou de sirop. Les sucres sont choisis dans le groupe constitué par les monosaccharides, les disaccharides, les trisaccharides, les oligo et polysaccharides comme par exemple les sirops de glucose, de glucose-fructose, de fructose-glucose, les sirops de glucose riches en maltose, le saccharose, le fructose, le maltose, le tréhalose, le mannose, le dextrose, le tagatose ou l'isomaltulose, seuls ou en mélange entre eux. Les polyols sont choisis dans le groupe constitué par le maltitol, le sorbitol, le mannitol, l'érythritol, le xylitol, l'iditol, les sirops de maltitol, l'isomalt, le lactitol, les sirops de sorbitol, les sirops de glucose hydrogénés, seuls ou en mélange entre eux. On peut également faire comporter à l'agent édulcorant des édulcorants intenses comme par exemple la saccharine, l'aspartame ou l'acésulfame K.

L'agent édulcorant représente de préférence 25 à 85%, de préférence 40 à 85% et plus préférentiellement de 60 à 85% en poids du produit fini.

En ce qui concerne la teneur en eau des gommes selon l'invention, celle-ci est généralement comprise entre 10 et 25%, de préférence entre 14 et 24%. La teneur en eau du produit fini dépend de la confiserie concernée. Pour des gelées, des teneurs en eau de 14 à 22% environ sont généralement préconisées, alors que pour des gommes, les teneurs en eau varient de 10 à 20% environ, selon qu'il s'agisse de gommes dures ou de gommes tendres, ces dernières étant plus hydratées.

Les gommes selon l'invention peuvent également comprendre un ou plusieurs composés choisis parmi les arômes naturels ou synthétiques, les colorants naturels ou synthétiques, les humectants, les sels, les acides, les extraits, les purées ou pulpes de fruits, les huiles, les graisses, les conservateurs, les exhausteurs de goût, les vitamines, les actifs pharmaceutiques, les oligosaccharides et les fibres, les dextrines, les maltodextrines branchées ou hyperbranchées, le polydextrose, les pré ou probiotiques, les minéraux tels que calcium, magnésium et autres suppléments alimentaires tels que par exemple le DHA, qui seront présents dans la confiserie à hauteur de 0 à 10% en poids.

L'invention a également pour objet un procédé de préparation de confiseries gélifiées caractérisé en ce qu'il comprend les étapes de :
- préparation d'un mélange comprenant au moins un amidon de légumineuse fluidifié et stabilisé présentant une teneur en amylose comprise entre 25 et 40%, de préférence comprise entre 30 et 40%, au moins un édulcorant, et de l'eau,
- cuisson du mélange à une température comprise entre 100 et 150°C jusqu'à l'obtention de la matière sèche voulue,
- la mise en forme du mélange cuit de manière à obtenir des confiseries,
- la récupération des confiseries gélifiées ainsi obtenues.

On peut tout à fait envisager de cuire l'amidon séparément puis d'y ajouter les autres ingrédients, ou de préchauffer l'édulcorant avant d'y ajouter l'amidon, mais pour une fabrication en continu, on préfère disperser les édulcorants et l'amidon dans une cuve de mélange, préchauffer ce mélange à environ 70-80°C pour dissoudre les édulcorants, cuire le mélange sur cuiseur haute pression à une température comprise entre 100 et 150°C suivant la texture souhaitée et le type de confiserie préparée, puis ajouter les arômes, colorants, actifs, et édulcorants intenses. La température de cuisson devra être suffisante pour cuire l'amidon (supérieure à 120°C), sauf dans le cas où on choisirait de cuire l'amidon à part, puisque dans ce cas l'édulcorant pourra être cuit seul à environ 110°C avant incorporation de l'amidon cuit à part. En tout état de cause, la température de cuisson du mélange sera inférieure ou égale à 150°C, ce qui constitue un des avantages de la présente invention.

La durée de cuisson dépend du matériel utilisé.

La cuisson peut être effectuée sur des cuiseurs à double enveloppe à pression atmosphérique, sous vide partiel ou total ou sous pression, ou en continu sur des cuiseurs haute pression comme les échangeurs tubulaires, les échangeurs à plaques ou les jet-cookers. Le jet-cooker peut comporter un ou plusieurs injecteurs de vapeur, ce qui modifie les temps de cuisson. L'injection de vapeur vive dans le produit assure une dispersion rapide et homogène de la chaleur et des ingrédients. L'échangeur tubulaire nécessite une dispersion homogène de tous les ingrédients avant cuisson, les durées de cuisson sont plus longues et l'intensité moins forte.

Après cuisson, les arômes, colorants, acides et autres sont ajoutés dans le sirop chaud et on procède à la mise en forme des confiseries par exemple par coulée du mélange à une température comprise entre 60 et 90°C dans un amidon de coffrage à environ 6% d'humidité, dans lequel peuvent être imprimées des formes diverses et variées. La viscosité du mélange conditionne fortement la coulée, une viscosité trop importante entraînant la formation de « queues de coulée » non désirées. Bien évidemment, d'autres méthodes de formage peuvent être mises en oeuvre, comme l'extrusion, l'injection-moulage ou le coulage en moules.

Selon l'invention, on choisira de préférence la technique de l'amidon de coffrage, avec un brix à la coulée supérieur ou égal à 78, de préférence supérieur ou égal à 80, ce qu'aucun amidon de l'art antérieur ne permettait de mettre en oeuvre.

On entend par « brix » au sens de la présente invention le degré Brix qui correspond, pour une solution de saccharose, au rapport de la quantité de saccharose dissout sur la quantité de sirop. Pour une solution de saccharose pure, le degré Brix est égal à la matière sèche. Pour les sirops de glucose ou d'autres sucres et polyols, il existe des tables de conversion permettant de déterminer la correspondance entre Brix et matière sèche. Le degré Brix est une mesure très rapide qui s'effectue en routine par les confiseurs généralement au moyen d'un réfractomètre à main.

Selon la présente invention, l'étape d'étuvage traditionnellement pratiquée après la coulée n'est plus nécessaire ce qui constitue un autre avantage certain, compte tenu des gains de temps et d'énergie non négligeables. Par ailleurs, l'étuvage à haute température se traduisant souvent par une hydrolyse partielle de l'amidon ou de la gélatine, il est techniquement très avantageux selon l'invention de pouvoir supprimer cette opération.

Une fois coulées, les confiseries selon l'invention sont placées à température ambiante, pour le temps nécessaire à la gélification.

Une fois formées et refroidies, après environ 3 à 20 heures, les confiseries peuvent ensuite être levées des moules, brossées pour éliminer l'amidon de coffrage résiduel. Elles sont ensuite soit conditionnées telles quelles, soit soumises à d'autres opérations complémentaires, telles que le polissage, l'huilage, le givrage, le candissage ou la dragéification avec un sucre, un polyol et/ou un acide (citriquage). Elles peuvent également être enrobées de billes ou granulés décoratifs, colorés ou non, aromatisés ou non, à base de sucres et/ou de polyols. Des confiseries particulièrement attrayantes ont été obtenues avec un enrobage au moyen de granulés multicolores de maltitol. Bien évidemment, lesdits granulés peuvent être utilisés dans d'autres types de confiseries comme notamment en inclusion dans des sucres cuits.

En ce qui concerne les proportions d'amidon, on préfère que le mélange avant cuisson en comprenne de 0,5 et 25%, de préférence entre 1 et 20% et plus préférentiellement entre 5 et 15% en poids.

De préférence, l'amidon de pois modifié selon la présente invention constituera la seule et unique source d'amidon.

On utilisera dans le mélange à cuire une quantité d'eau variable selon le brix de coulée souhaité en final.

La mise en oeuvre de l'amidon particulier conforme à l'invention est particulièrement avantageuse dans le sens ou elle permet une cuisson à haute matière sèche et à une température pas trop élevée sans générer trop de viscosité, et par la suite un coulage facilité et une gélification rapide sans étuvage.

Selon que l'on souhaite substituer tout ou partie de la gélatine ou des gommes végétales traditionnellement utilisées, on pourra en outre faire comporter au mélange à cuire une proportion de ces dernières comprise par exemple entre 0,1 et 10%.

En ce qui concerne l'édulcorant, le mélange à cuire en comprend 25 à 85%, de préférence 40 à 85% et plus préférentiellement de 60 à 85% en poids sur sec.

Selon une variante préférée de la présente invention, on utilisera un sirop de glucose de DE (ou dextrose équivalent) compris entre 30 et 90, et au moins un sucre choisi parmi les mono, di ou trisaccharides. Selon une variante préférée, on utilisera un mélange de sirop de glucose et de saccharose dans une proportion d'environ 50/50.

Pour une confiserie sans sucre, on pourra utiliser comme mentionné ci-avant, un ou plusieurs polyols, sous forme de poudre ou de sirop. Selon une variante préférée, on utilisera un sirop de maltitol comme notamment le LYCASIN^{®}80/55, seul ou en mélange avec du sorbitol.

Les arômes, colorants, et autres ingrédients complémentaires sont de préférence ajoutés en fin de cuisson, de manière à éviter leur dégradation par la chaleur. Leur teneur représente de 0 à 10% en poids environ dans le mélange.

L'invention sera mieux comprise à la lecture des exemples qui suivent, qui se veulent illustratifs et non limitatifs.

### Exemple 1 : GOMMES TENDRES SELON L'INVENTION

### A - FORMULE

| | *Composition (%) du produit fini* |
|---|---|
| ➢ Amidon de pois fluidifié acétylé* | 9.1 |
| ➢ Sirop de glucose FLOLYS^{®} B6080S | 31.3 |
| ➢ Saccharose | 41.0 |
| ➢ Acide citrique (50 % MS) | 0.6 |
| ➢ Eau | 18.0 |
| ➢ Arôme, colorant | qs |
| | 100.0 |

❖ niveau de fluidification WF : 83 indice d'acétyle Ia : 1,62

### B - MODE OPÉRATOIRE

❖ Mélanger les sucres, l'amidon et de l'eau de manière à obtenir une matière sèche de 75% et préchauffer le mélange 10 min. à 70° C.
❖ Cuire dans un cuiseur haute pression à 145° C pendant 90 s.
❖ Ajouter arôme, acide et colorant.
❖ Couler dans l'amidon de coffrage déshydraté et laisser 12 heures à température ambiante. (Brix de coulée : 80)
❖ Lever et brosser (Brix final : 82)
❖ Huiler, candir ou dragéifier les gommes.

### EXEMPLE 2 : GOMMES TENDRES SELON L'INVENTION COMPRENANT DE LA GELATINE

### A - FORMULE

| | *Composition du produit fini (%)* |
|---|---|
| ➢ Amidon de pois fluidifié acétylé* | 11,1 |
| ➢ Saccharose | 33,3 |
| ➢ Sirop de glucose FLOLYS^{®} B6080S | 32,7 |
| ➢ Gélatine 160 blooms | 3,8 |
| ➢ Eau | 18,0 |
| ➢ Arôme | qs |
| ➢ Colorant | qs |
| ➢ Acide lactique | 1,1 |
| | 100,0 |

| | |
|---|---|
| * niveau de fluidification WF : 84 indice d'acétyle Ia : 1,53 | |

### B - MODE OPÉRATOIRE

❖ Solubiliser la gélatine dans une quantité suffisante d'eau à 70° C.
❖ Ajouter le sirop de glucose puis le mélange des poudres.
❖ Maintenir 10 minutes à 70 °C.
❖ Cuire par injection de vapeur à 150° C pendant 15 secondes.
❖ Acidifier et aromatiser.
❖ Couler dans l'amidon de coffrage déshydraté et laisser 12 heures à température ambiante (Brix de coulée: 80)
❖ Lever et brosser (brix final : 82)
❖ Huiler, candir, ou dragéifier les gommes.

### EXEMPLE 3: GOMMES TENDRES SELON L'ART ANTERIEUR ET COMPARAISON AVEC LES GOMMES SELON L'INVENTION

### A1 - FORMULE

| | *Composition* | |
|---|---|---|
| | *En poids* | *Produit fini* |
| ➢ Amidon de mais fluidifié CLEARGUM^{®} MB45 | 113 | 12.5 |
| ➢ Sirop de glucose FLOLYS^{®} B6080S | 436 | 41.1 |
| ➢ Saccharose | 269 | 33.8 |
| ➢ Acide citrique (50 % MS) | 5 | 0.6 |
| ➢ Eau | 177 | 12.0 |
| ➢ Arôme, colorant | qs | qs |
| | 1000.0 | 100.0 |

### B1 - MODE OPÉRATOIRE

❖ Mélanger les sucres, l'amidon et l'eau et préchauffer 10 min. à 70° C.
❖ Cuire dans un cuiseur haute pression à 150° C pendant 15 s.
❖ Ajouter arôme, acide et colorant.
❖ Couler dans l'amidon de coffrage déshydraté et laisser étuver à 55°C pendant 24 à 36 heures (Brix de coulée : 70)
❖ Lever et brosser (Brix final : 88)
❖ Huiler, candir ou dragéifier les gommes.

### A2 - FORMULE

| | *Composition* | |
|---|---|---|
| | *En poids* | *produit fini* |
| ➢ Amidon de mais EURYLON 7 (70% amylose) | 94 | 8.4 |
| ➢ Sirop de glucose FLOLYS^{®} B6080S | 495 | 40.0 |
| ➢ Saccharose | 324 | 32.6 |
| ➢ Acide citrique (50 % MS) | 20 | 1.0 |
| ➢ Eau | 67 | 18.0 |
| ➢ Arôme, colorant | qs | qs |
| | 1000.0 | 100.0 |

### B2 - MODE OPÉRATOIRE

❖ Mélanger les sucres, l'amidon et l'eau et préchauffer 10 min. à 80° C.
❖ Cuire dans un cuiseur haute pression à 170° C pendant 15 s.
❖ Ajouter arôme, acide et colorant.
❖ Couler dans l'amidon de coffrage déshydraté et laisser reposer quelques heures à température ambiante (Brix de coulée: 79)
❖ Lever et brosser (Brix final: 82)
❖ Huiler, candir ou dragéifier les gommes.

**Tableau 1 : comparaison des produits obtenus**

| | **Exemples 1,2 2** | **Exemple 3 (1)** | **Exemple 3 (2)** |
|---|---|---|---|
| amidon | Pois fluidifié acétylé | Mais fluidifié | Mais riche en amylose |
| Température De cuisson (°C) | 150 | 150 | 170 |
| Brix de coulée | **80** | 70 | 79 |
| Temps d'étuvage à 50°C | 0 | **30 heures** | 0 |
| transparence | +++ | ++ | + |
| Aspect collant | + | ++ | ++ |
| fermeté | ++ | ++ | +++ (rétrogradation importante |

L'utilisation d'un amidon selon l'invention permet d'obtenir, en mettant en oeuvre un procédé simple, sans étuvage, avec une température de cuisson normale, des gommes de qualité supérieure par rapport à l'art antérieur. Les gommes selon l'invention présentent une transparence accrue, peu ou pas d'aspect collant, et sont stables vis à vis du durcissement dans le temps.

### EXEMPLE 4 : GOMMES TENDRES SANS SUCRE SELON L'INVENTION

### A - FORMULE

| | *Composition du produit fini (%)* |
|---|---|
| ➢ Amidon de pois fluidifié acétylé* | 13,2 |
| ➢ Sirop de maltitol LYCASIN^{®}80/55 | 52 |
| ➢ Sirop de sorbitol NEOSORB^{®}70/70 | 15 |
| ➢ Gélatine 180 blooms | 4,5 |
| ➢ Eau | 14 |
| ➢ Arôme | qs |
| ➢ Colorant | qs |
| ➢ Acide lactique | 1,3 |
| | 100,0 |

| | |
|---|---|
| * niveau de fluidification WF : 83 indice d'acétyle Ia : 1,62 | |

### B - MODE OPÉRATOIRE

❖ Incorporer sous agitation vive l'amidon dans le mélange de sirops de polyols préchauffé à 50°C.
❖ Disperser la gélatine dans l'eau à 70°C et l'ajouter au premier mélange.
❖ Cuire dans un cuiseur haute pression à 140°C pendant 120 secondes.
❖ Ajouter arôme, acide, colorant.
❖ Couler dans l'amidon de coffrage déshydraté (Brix de coulée : 81)
❖ Lever et brosser (brix final : 86)
❖ Huiler, candir ou dragéifier les gommes.

### Exemple 5: GOMMES TENDRES ENROBEES SELON L'INVENTION

On prépare des gommes tendres selon les exemples 1, 2 et 4. Après levage et brossage des gommes, celles-ci sont enrobées comme décrit ci-après.

Des granules de maltitol sont tout d'abord préparés selon le procédé suivant (qui peut être mis en oeuvre avec n'importe quel type de sucres ou de polyols) :

### A - Formule

> Amorce : fraction 400-500 microns de maltitol MALTISORB^{®}
> Sirop de dragéification (à 62 % MS, utilisé à 50°C)

| | *Composition mise en oeuvre* | *Composition matière sèche* |
|---|---|---|
| - MALTISORB^{®} P200 | 612,0 | 98,7 |
| - Solution de gomme arabique à 40 % MS | 20,2 | 1,3 |
| - Eau | 367,8 | - |
| | 1 000,0 | 100,0 |

| | | |
|---|---|---|
| Saupoudrage : maltitol MALTISORB^{®} P35 | | |

### B - MÉTHODE (pour 200 G D'AMORCE)

❖ A l'aide d'un pulvérisateur haute pression, pulvériser sur l'amorce en rotation dans la turbine, 20 à 25 g de sirop de dragéification
   Laisser repartir 15 secondes tout en mélangeant manuellement
   Saupoudrer avec le maltitol (15 à 20 g).
   Sécher avec de l'air à 45°C pendant 10 minutes environ.
   Répéter ces opérations plusieurs fois (10).
❖ Augmenter de façon progressive les quantités de sirop et de poudre selon les séquences suivantes (quantités moyennes)

| **Quantité de sirop (g)** | **Quantité de poudre (g)** | **Durée de séchage (min)** | **Nombre de cycles** | **Poids de granules obtenus** |
|---|---|---|---|---|
| 30 | 30 | 10 | 5 | |
| 35 | 35 | 10 | 5 | 1 kg environ |
| 50 | 50 | 10 | 5 | |
| 70 | 50 | 10 | 5 | |
| 80 | 50 | 10 | 10 | 2 kg environ |

L'aromatisation est effectuée en fin d'enrobage.
La couleur est réalisée par pulvérisation d'une solution de maltitol colorée (même solution que sirop de dragéification).
Les granulés ne sont ni lissés, ni cirés.

On réalise différents lots de granulés de différentes couleurs, et on enrobe les gommes selon l'invention préalablement humidifiées à l'eau ou avec un liant comme la gomme arabique, en introduisant tout d'abord les granulés multicolores dans la turbine de dragéification, puis les gommes humidifiées. On obtient alors un enrobage uniforme qui donne un aspect encore plus attractif aux confiseries selon l'invention.

## Revendications

1. Confiserie gélifiée à base d'amidon, **caractérisée en ce qu'**elle comprend un amidon de légumineuse fluidifié et stabilisé présentant une teneur en amylose comprise entre 25 et 40%, de préférence comprise entre 30 et 40%.

2. Confiserie gélifiée selon la revendication 1, **caractérisée en ce que** ledit amidon est un amidon de pois.

3. Confiserie selon l'une ou l'autre des revendications 1 et 2, **caractérisée en ce que** ledit amidon de pois fluidifié est acétylé ou hydroxypropylé.

4. Confiserie selon l'une quelconque des revendications 1 à 3, **caractérisée en ce qu'**elle comprend de 0,5 à 25% en poids d'amidon.

5. Confiserie selon l'une quelconque des revendications 1 à 4, **caractérisée en ce que** ledit édulcorant est un sucre choisi dans le groupe constitué par les mono, les di ou les trisaccharides, les oligo et polysaccharides, seuls ou en mélange entre eux.

6. Confiserie selon l'une quelconque des revendications 1 à 5, **caractérisée en ce que** ledit édulcorant est choisi dans le groupe constitué par le maltitol, le sorbitol, le mannitol, l'iditol, l'érythritol, le xylitol, les sirops de sorbitol, de maltitol, les sirops de glucose hydrogénés, les édulcorants intenses, seuls ou en mélange entre eux.

7. Procédé de préparation d'une confiserie gélifiée à base d'amidon, **caractérisé en ce qu'**il comprend les étapes de :
- préparation d'un mélange comprenant au moins un amidon de légumineuse fluidifié et stabilisé présentant une teneur en amylose comprise entre 25 et 40%, de préférence comprise entre 30 et 40%, au moins un édulcorant, et de l'eau,
- la cuisson du mélange à une température comprise entre 100 et 150°C jusqu'à l'obtention de la matière sèche voulue,
- la mise en forme du mélange cuit de manière à obtenir des confiseries,
- la récupération des confiseries gélifiées ainsi obtenues.

8. Procédé selon la revendication 7, **caractérisé en ce que** ledit amidon est un amidon de pois.

9. Procédé selon l'une quelconque des revendications 7 et 8, **caractérisé en ce que** ledit amidon de pois fluidifié est acétylé ou hydroxypropylé.

10. Procédé selon l'une quelconque des revendications 7 à 9, **caractérisé en ce que** ledit mélange comprend 0,5 à 25% en poids d'amidon, 25 à 85% en poids d'édulcorant, et 0 à 10% d'arôme, acide et/ou colorant.

11. Procédé selon l'une quelconque des revendications 8 à 10, **caractérisé en ce qu'**il comprend en outre une étape d'enrobage des confiseries gélifiées à l'aide de granulés de polyols.
